# DEMANDE DE BREVET EUROPEEN

(11) **EP 3 815 987 A1**
(43) Date de publication de la demande: **05.05.2021**
(21) Numéro de dépôt: 20200678.9
(22) Date de dépôt: 08.10.2020
(51) Int. Cl.: B60R 21/02

(54) **VÉHICULE AUTOMOBILE UTILITAIRE MUNI D'UNE CLOISON DE SÉPARATION TRANSVERSALE À PORTE PIVOTANTE**

(30) Priorité: 29.10.2019 FR 1912114
(71) Demandeur: Renault S.A.S., 92100 Boulogne-Billancourt (FR)
(72) Inventeur: COLIN, Thierry, 28500 CHERISY (FR); PERRIN, Vincent, 78660 SAINT MARTIN DE BRETHENCOURT (FR)

(57) **Abrégé**

L'invention concerne un véhicule automobile comprenant un habitacle (12) et une zone de chargement (14). L'habitacle présente un siège passager (24) rabattable, tandis que ladite zone de chargement (14) présente une paroi de plancher (15) opposée à une paroi de plafond (18). Le véhicule comprend également une cloison de séparation (16) entre l'habitacle (12) et la zone de chargement (14). La cloison de séparation comprend une porte (26) en arrière du siège passager (24). La porte (26) est mobile entre une première position où ladite porte (26) isole ledit habitacle (12) et ladite zone de chargement (14), et une deuxième position où ladite porte (26) s'étend dans ledit habitacle (12). Le véhicule comprend un dispositif de verrouillage supérieur (32) situé au voisinage de ladite paroi de plafond (18) pour pouvoir maintenir ladite porte (26) dans ladite première position.

## Description

La présente invention se rapporte à un véhicule automobile utilitaire muni d'une cloison de séparation transversale entre l'habitacle et la zone arrière de chargement du véhicule.

Des véhicules automobiles connus, et notamment les véhicules utilitaires, comprennent usuellement un habitacle et une zone de chargement située en arrière dudit habitacle. L'habitacle présente un siège conducteur situé en regard d'un poste de conduite du véhicule et latéralement, un siège passager rabattable contigu au siège conducteur. Quant à la zone de chargement, elle présente une paroi de plancher opposée à une paroi de plafond. Cette paroi de plancher est apte à recevoir des charges de toute nature relativement importantes.

En outre, le véhicule automobile utilitaire comporte une cloison de séparation transversale s'étendant entre l'habitacle et la zone de chargement de manière à pouvoir prévenir le mouvement des charges précitées vers l'habitacle notamment lors d'une phase de décélération du véhicule.

Aussi, la cloison de séparation transversale comprend une porte située en arrière du siège passager, de manière à pouvoir étendre des charges longitudinales à cheval sur la zone de chargement et dans l'habitacle à l'emplacement habituel du passager dont le siège est alors rabattu.

Pour ce faire, la porte est montée à pivotement selon un axe de pivotement sensiblement perpendiculaire aux parois de plancher et de plafond, et elle est mobile en pivotement entre une première position d'obturation où la porte isole l'habitacle et la zone de chargement, et une deuxième position où elle s'étend dans l'habitacle entre le siège passager et le siège conducteur après que le siège passager a été rabattu et où la zone de chargement communique avec ledit habitacle.

Lorsque la porte est dans la première position où elle isole l'habitacle et la zone de chargement, elle y est habituellement maintenue en position fixe au moyen d'un verrou à pêne rond monté sur la porte, et dont le pêne est entraîné en translation à travers un orifice pratiqué dans le plancher.

Un tel mode de blocage de la porte est, dans certaines circonstances, insuffisant pour prévenir le mouvement des charges vers l'habitacle.

Aussi, un problème qui se pose et que vise à résoudre la présente invention est de fournir un véhicule automobile, dont la porte de la paroi est plus résistante vis-à-vis des charges lorsqu'elle est dans une position d'obturation.

Dans le but de résoudre ce problème, il est proposé un véhicule automobile comprenant : un habitacle et une zone de chargement située en arrière dudit habitacle, ledit habitacle présentant un siège conducteur et un siège passager rabattable contigu audit siège conducteur, tandis que ladite zone de chargement présente une paroi de plancher opposée à une paroi de plafond ; une cloison de séparation transversale s'étendant entre ledit habitacle et ladite zone de chargement, ladite cloison de séparation transversale comprenant une porte située en arrière dudit siège passager, ladite porte étant montée à pivotement selon un axe de pivotement sensiblement perpendiculaire auxdites parois de plancher et de plafond, ladite porte étant mobile entre une première position où ladite porte isole ledit habitacle et ladite zone de chargement, et une deuxième position où ladite porte s'étend dans ledit habitacle entre ledit siège passager et ledit siège conducteur après que ledit siège passager a été rabattu et où ladite zone de chargement communique avec ledit habitacle. Le véhicule automobile comprend un dispositif de verrouillage supérieur situé au voisinage de ladite paroi de plafond et à l'opposé dudit axe de pivotement pour pouvoir maintenir ladite porte dans ladite première position.

Ainsi, une caractéristique de l'invention réside dans la mise en œuvre d'un dispositif de verrouillage supérieur permettant la retenue de la porte dans sa partie supérieure lorsque d'éventuelles charges viennent en appui à force contre la porte, par exemple durant la décélération du véhicule automobile. En effet, lorsque la porte est refermée et que le siège passager est dressé, la porte est empêchée de pivoter vers l'habitacle par la simple présence du siège qui la retient dans sa partie basse. De surcroît, et comme on l'expliquera ci-après, des moyens de verrouillage inférieur de la porte peuvent être mis en œuvre. De la sorte, grâce au dispositif de verrouillage supérieur, on réalise un autre point de blocage de la porte qui améliore sa retenue lors des phases de décélération. Ainsi la porte est retenue d'un côté au niveau de son axe de pivotement, et de l'autre grâce au dispositif de verrouillage supérieur et au siège passager et /ou au dispositif de verrouillage inférieur.

Selon un mode de mise en œuvre de l'invention particulièrement avantageux, ledit dispositif de verrouillage comprend une gâche mobile installée entre ledit habitacle et ladite zone de chargement, tandis que ladite porte présente un pêne monté en position fixe pour pouvoir coopérer avec ladite gâche. Ainsi qu'on l'expliquera ci-après plus en détail, la gâche mobile permet à la fois un escamotage automatique lorsque la porte est refermée et que le pêne fixe vient coopérer avec elle, et également à l'inverse, un appui en butée du pêne contre la gâche revenu dans sa position initiale, pour venir verrouiller la porte.

En outre, et selon un mode de réalisation de l'invention particulièrement avantageux, ledit dispositif de verrouillage comprend un berceau, tandis que ladite gâche mobile est montée mobile à pivotement dans ledit berceau. Ainsi, la gâche mobile est aisément ajustée dans le berceau indépendamment de la fabrication du véhicule automobile et elle peut alors être installée de manière optionnelle sur les véhicules dotés d'une cloison de séparation à porte pivotante. De surcroît, un tel berceau peut également être installé aisément sur les véhicules d'occasion en reprise qui n'en seraient pas dotés, et ce par simple vissage.

De plus, ladite gâche mobile présente une première extrémité montée à rotation dans ledit berceau et une seconde extrémité d'arrêt opposée adaptée à être retenue par ledit berceau. Ainsi, la gâche mobile est prisonnière du berceau et elle est mobile entre une position où sa seconde extrémité d'arrêt vient s'étendre en saillie du berceau et une position dans laquelle elle est escamoté à l'intérieur du berceau comme on l'expliquera ci-après.

Aussi, ladite gâche mobile présente une partie formant rampe entre lesdites première et seconde extrémités adaptée à recevoir ledit pêne en glissement. De la sorte, lorsque la porte est refermée, le pêne vient en appui glissant sur la partie formant rampe et tandis que la porte est entraînée en pivotement, le pêne en mouvement provoque le pivotement de la gâche vers l'intérieur du berceau jusqu'à ce que le pêne atteigne la seconde extrémité d'arrêt. La gâche reprend alors d'elle-même sa position initiale et le pêne vient en prise dans la seconde extrémité d'arrêt. La porte est alors bloquée en pivotement.

Préférentiellement, ladite seconde extrémité d'arrêt présente un décrochement adapté à recevoir ledit pêne. Le décrochement définit alors une portée d'appui et, le pêne entraîné en glissement contre la partie de gâche formant rampe, vient alors au droit du décrochement, tandis que la gâche reprend son état initial ; le pêne étant alors apte à venir en appui contre la portée d'appui pour interdire le pivotement de la porte vers l'habitacle.

Avantageusement, ledit berceau et ladite gâche sont reliés ensemble par un ressort de rappel pour pouvoir maintenir ladite gâche en saillie dudit berceau. De la sorte, lorsque le pêne vient en glissement contre la partie de la gâche formant rampe et qu'il l'entraîne en pivotement vers l'intérieur du berceau, tandis que le pêne termine sa course, le ressort se comprime alors. La gâche reprend automatiquement sa position en saillie du berceau, lorsque le pêne arrive en regard du décrochement, tandis que le ressort se relâche. L'extrémité d'arrêt offre ainsi la portée d'appui immédiatement en regard du pêne pour bloquer la porte en pivotement vers l'habitacle.

En outre, ledit berceau est préférentiellement solidaire de ladite paroi de plafond. La paroi de plafond est par exemple équipée d'une traverse de plafond et le berceau peut alors y être solidarisé par son intermédiaire de manière rigide.

De plus, le véhicule automobile comprend en outre un dispositif de verrouillage inférieur situé au voisinage de ladite paroi de plancher. De la sorte, la porte est maintenue en position fixe dans sa partie inférieure en surplus de sa partie supérieure.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique partielle en coupe selon un plan sagittal paramédian d'un véhicule automobile utilitaire au niveau supérieur ;
[Fig. 2] est une vue de l'objet représenté sur la figure [Fig. 1] et équipé de l'objet de l'invention dans un premier état ;
[Fig. 3] est une vue schématique partielle de détail de l'objet de l'invention représenté sur la figure [Fig. 2], dans un second état ;
[Fig. 4] est une vue schématique de dessus d'un véhicule automobile utilitaire illustrant en traits interrompus des éléments de l'invention ; et
[Fig. 5] est une vue schématique de côté du véhicule automobile utilitaire représenté sur la [Fig. 4] illustrant en traits interrompus des éléments de l'invention.

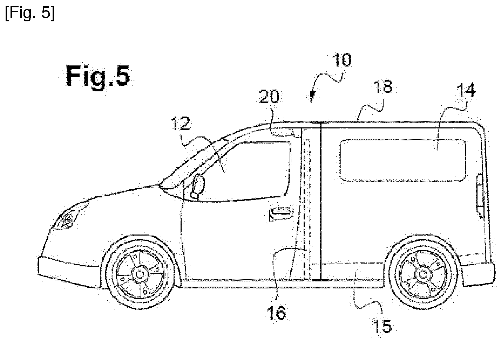

La figure [Fig. 5] illustre, vu de côté, un véhicule automobile utilitaire 10. Il comporte un habitacle 12 et vers l'arrière, une zone de chargement 14, lesquels sont séparés l'un de l'autre par une cloison de séparation 16 apparaissant en traits interrompus. Aussi, apparaissent sur la figure [Fig. 5], un pavillon 18 formant paroi de plafond et en traits interrompus, une traverse de pavillon 20. En outre, la zone de chargement 14 est délimitée, à l'opposé du pavillon 18 par une paroi de plancher 15, et latéralement, par une paroi latérale droite 21 et une paroi latérale gauche 23 opposée.

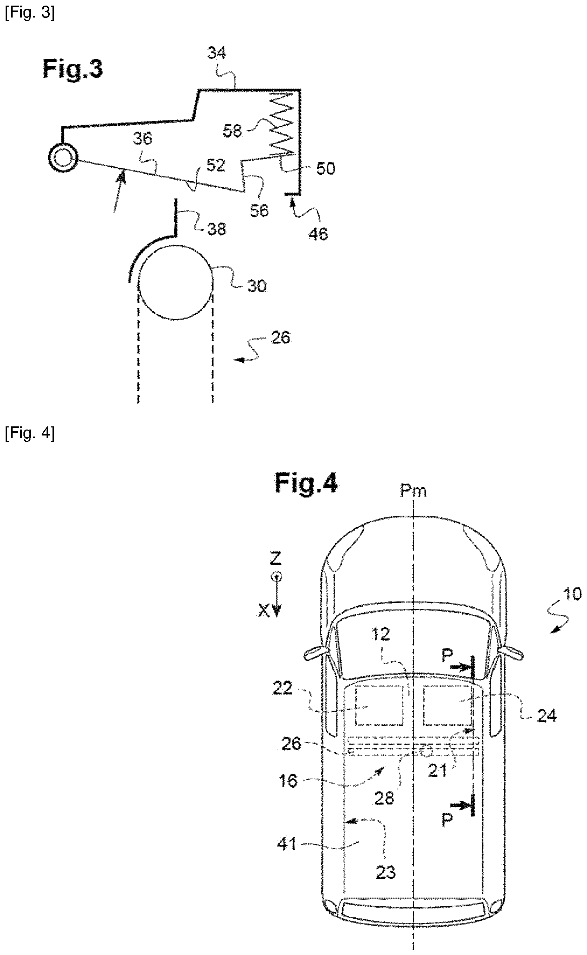

On retrouve sur la figure [Fig. 4] en vue de dessus le véhicule automobile utilitaire 10 et en transparence, son habitacle 12 et sa zone de chargement 14, séparés l'un de l'autre par la cloison de séparation 16. Aussi, l'habitacle 12 comprend un siège conducteur 22 situé en regard du poste de conduite, et un siège passager contigu 24. Le siège passager 24 est rabattable vers l'avant du véhicule pour être escamoté.

Aussi, la cloison de séparation 16 comporte une porte 26 située en arrière du siège passager 24. La porte 26 est montée à pivotement autour d'un axe 28 sensiblement perpendiculaire au pavillon 18 de manière à pouvoir pivoter vers l'habitacle 12 pour venir s'étendre entre le siège conducteur 22 et le siège passager 24. Sur la figure [Fig. 4], la porte 26 est représentée dans une première position où elle isole l'habitacle 12 de la zone de chargement 14. On comprend alors que, dès lors que la porte 26 est ouverte dans une seconde position, des charges longitudinales peuvent être chargées dans la zone de déchargement 14 jusque dans l'habitacle 12 au-dessus du siège passager 24 rabattu.

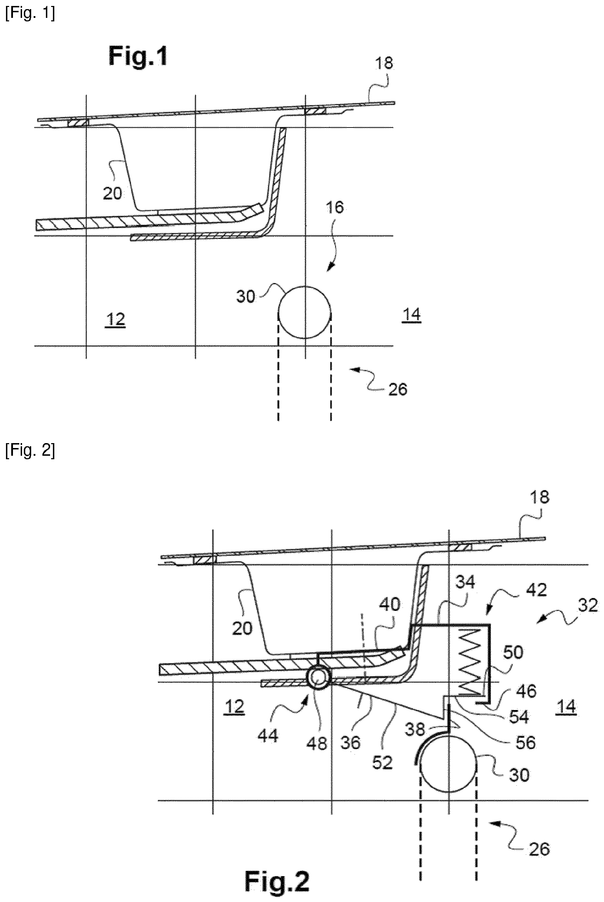

La figure [Fig. 1] montre en coupe selon un plan sagittal paramédian, soit un plan P parallèle au plan médian Pm du véhicule automobile utilitaire 10 selon les composantes X, Z du véhicule apparaissant sur la figure [Fig. 4], l'environnement des éléments de l'invention. Ce plan P vient couper la partie supérieure du véhicule au-dessus du siège passager 24 le long de sa paroi latérale 21.

On retrouve ainsi en détail sur cette figure [Fig. 1], le pavillon 18, l'habitacle 12 séparé de la zone de chargement 14 par la cloison de séparation 16, et la traverse de pavillon 20. Aussi apparaît en détail sur la figure [Fig. 1], une traverse supérieure 30 de la porte 26. C'est en effet entre la traverse de pavillon 20 et la traverse supérieure 30 de la porte 26 qu'un dispositif de verrouillage supérieur 32 va être installé. Ce dispositif de verrouillage supérieur 32, élément de l'invention, apparaît en détail sur la figure [Fig. 2].

Il comprend un berceau 34 solidaire de la traverse de pavillon 20, et dans lequel est installée une gâche mobile 36, laquelle est apte à coopérer avec un pêne 38 monté en position fixe sur la traverse supérieure 30. A l'inverse des serrures classiques, la gâche est ici mobile, tandis que le pêne est fixe sur la porte.

Le berceau 34 et la gâche mobile 36 s'étendent selon une direction longitudinale du véhicule automobile utilitaire 10, de l'habitacle 12 vers la zone de chargement 14. Le berceau 34 présente une première partie 40 montée vissée ou soudée par exemple sur la traverse de pavillon 20, et une seconde partie en retour 42 s'étendant librement au droit de la traverse supérieure 30. Le berceau 34 présente, dans sa première partie 40, une chape 44, et à l'opposé, dans la seconde partie en retour 42, un bec d'arrêt 46. Aussi, la gâche mobile 36 présente, une première extrémité de gâche 48 montée à rotation dans la chape 44 et une seconde extrémité de gâche 50 apte à venir prendre appui en arrêt contre le bec d'arrêt 46.

La gâche mobile 36 présente, entre la première extrémité 48 et la seconde extrémité 50, une première partie de gâche 52 adaptée à former rampe, et une seconde partie en décrochement 54 définissant une portée d'appui 56. On observera que la première partie de gâche 52 est sensiblement inclinée vers le plancher 15 de la zone de chargement 14.

En outre, le dispositif de verrouillage supérieur 32 est équipé d'un ressort de rappel 58, installé à l'intérieur de la seconde partie en retour 42 du berceau 34 et prenant appui à l'opposé de la seconde partie en décrochement 54 de manière à porter la seconde extrémité de gâche 50 en appui contre le bec d'arrêt 46. Partant, la portée d'appui 56 s'étend en saillie du berceau 34 contre laquelle vient prendre appui le pêne fixe 38 de la porte 26.

De la sorte, la porte 26 est bloquée en pivotement vers l'habitacle 12, à un niveau écarté de son axe de pivotement et aussi du plancher 15. On observera que la porte 26 comprend de préférence, un autre dispositif de verrouillage dans sa partie inférieure apte à coopérer avec le plancher 15. Cet autre dispositif de verrouillage n'apparaît pas sur les figures. Ainsi, la porte 26 maintenue dans sa partie supérieure et dans sa partie inférieure également, offre une parfaite résistance aux charges en appui sur le plancher 15, lorsque le véhicule automobile utilitaire 10 subit une forte accélération négative.

En outre, le dispositif de verrouillage supérieur 32, du fait de sa structure, offre plusieurs avantages.

Tout d'abord, lorsqu'il est nécessaire de libérer la porte 26 pour la faire pivoter à l'intérieur de l'habitacle 12 après que le siège passager 24 a été rabattu et de manière à faire communiquer l'une avec l'autre la zone de chargement 14 et la partie d'habitacle 12 situé au-dessus du siège passager 24 rabattu, le déverrouillage du pêne fixe 38 est simplement réalisé en exerçant une pression manuelle sur la première partie de gâche 52 pour enfoncer la gâche mobile 36 à l'intérieur du berceau 34. De la sorte, tandis que le ressort de rappel 58 se comprime, la portée d'appui 56 est elle-même entraînée à l'intérieur du berceau 34, de sorte que le pêne fixe 38 échappe à sa portée comme l'illustre la figure [Fig. 3].

Après que la porte a été pivotée à l'intérieur de l'habitacle 12, la gâche mobile 36 peut être relâchée, et sous l'action du ressort de rappel 38, la seconde extrémité de gâche 50 revient prendre appui sur le bec d'arrêt 46. De la sorte, la gâche mobile 36 demeure prisonnière du berceau 34 et dans sa position inclinée originelle.

Aussi à l'inverse, la porte 26 peut être entraînée en pivotement vers sa première position où elle isole l'habitacle 12 de la zone de chargement 14. Aussi, à l'approche de cette première position, tandis que la porte 26 est entraînée en pivotement vers la zone de chargement 14, son pêne fixe 38 accoste tout d'abord la première partie de gâche 52 formant rampe, au voisinage de la première extrémité 48 de la gâche mobile 36. Le mouvement de la porte 26 en pivotement se poursuivant, le pêne fixe 38 est entraîné en glissement contre la première partie de gâche 52, tandis qu'elle se rétracte vers l'intérieur du berceau 34 et que le ressort de rappel 58 se comprime. Poursuivant son mouvement, le pêne fixe 38 vient alors au droit de la seconde partie en décrochement 54 et échappe à la portée de la première partie de gâche 52. Dès lors, la gâche mobile 36 est relâchée, et le ressort de rappel 58 se détend, tandis que la seconde extrémité de gâche 50 vient en appui contre le bec d'arrêt 46. Conséquemment, la portée d'appui 56 de la gâche mobile 36 vient alors s'étendre en regard du pêne fixe 38. Ce dernier est alors prisonnier et la porte 26 est bloquée en pivotement.

Ainsi, le verrouillage de la porte 26, à tout le moins dans sa partie supérieure, est réalisé de manière automatique dès lors que l'on entraîne la porte 26 en pivotement de l'habitacle 12 vers la zone de chargement 14.

Le véhicule automobile utilitaire 10 équipé du dispositif de verrouillage supérieur 34, permet à la fois d'offrir une sécurité supplémentaire à la déformation de la porte 26 lors d'une accélération négative pour le passager. De surcroît, la mise en œuvre du dispositif de verrouillage supérieur 34 est aisée.

## Revendications

1. Véhicule automobile comprenant :
- un habitacle (12) et une zone de chargement (14) située en arrière dudit habitacle (12), ledit habitacle présentant un siège conducteur (22) et un siège passager (24) rabattable contigu audit siège conducteur (22), tandis que ladite zone de chargement (14) présente une paroi de plancher (15) opposée à une paroi de plafond (18) ;
- une cloison de séparation transversale (16) s'étendant entre ledit habitacle (12) et ladite zone de chargement (14), ladite cloison de séparation transversale comprenant une porte (26) située en arrière dudit siège passager (24), ladite porte (26) étant montée à pivotement selon un axe de pivotement (28) sensiblement perpendiculaire auxdites parois de plancher (15) et de plafond (18), ladite porte (26) étant mobile entre une première position où ladite porte (26) isole ledit habitacle (12) et ladite zone de chargement (14), et une deuxième position où ladite porte (26) s'étend dans ledit habitacle (12) entre ledit siège passager (24) et ledit siège conducteur (22) après que ledit siège passager (24) a été rabattu et où ladite zone de chargement (14) communique avec ledit habitacle (12) ;
**caractérisé en ce qu'**il comprend un dispositif de verrouillage supérieur (32) situé au voisinage de ladite paroi de plafond (18) et à l'opposé dudit axe de pivotement (28) pour pouvoir maintenir ladite porte (26) dans ladite première position.

2. Véhicule automobile selon la revendication 1, **caractérisé en ce que** ledit dispositif de verrouillage (32) comprend une gâche mobile (36) installée entre ledit habitacle (12) et ladite zone de chargement (14), tandis que ladite porte (26) présente un pêne (38) monté en position fixe pour pouvoir coopérer avec ladite gâche (36).

3. Véhicule automobile selon la revendication 2, **caractérisé en ce que** ledit dispositif de verrouillage (32) comprend un berceau (34), tandis que ladite gâche mobile (36) est montée mobile à pivotement dans ledit berceau (34).

4. Véhicule automobile selon la revendication 3, **caractérisé en ce que** ladite gâche mobile (36) présente une première extrémité (48) montée à rotation dans ledit berceau (34) et une seconde extrémité d'arrêt (50) opposée adaptée à être retenue par ledit berceau (34).

5. Véhicule automobile selon la revendication 4, **caractérisé en ce que** ladite gâche mobile (36) présente une partie formant rampe (52) entre lesdites première (48) et seconde (50) extrémités adaptée à recevoir ledit pêne (38) en glissement.

6. Véhicule automobile selon la revendication 4 ou 5, **caractérisé en ce que** ladite seconde extrémité d'arrêt (50) présente un décrochement (54) adapté à recevoir ledit pêne (38).

7. Véhicule automobile selon l'une quelconque des revendications 3 à 6, **caractérisé en ce que** ledit berceau (34) et ladite gâche (36) sont reliés ensemble par un ressort de rappel (58) pour pouvoir maintenir ladite gâche (36) en saillie dudit berceau (34).

8. Véhicule automobile selon l'une quelconque des revendications 3 à 7, **caractérisé en ce que** ledit berceau (34) est solidaire de ladite paroi de plafond (18).

9. Véhicule automobile selon l'une quelconque des revendications 1 à 8, **caractérisé en ce qu'**il comprend en outre un dispositif de verrouillage inférieur situé au voisinage de ladite paroi de plancher (15).
